**Europäisches Patentamt**

**European Patent Office**

**Office européen des brevets**

(11) Veröffentlichungsnummer: **0 189 041**
**A1**

# EUROPÄISCHE PATENTANMELDUNG

(21) Anmeldenummer: 86100087.5

(22) Anmeldetag: 07.01.86

(51) Int. Cl.⁴: **B 01 D 53/02**, B 01 D 5/00

(30) Priorität: 19.01.85 DE 3501643

(43) Veröffentlichungstag der Anmeldung: **30.07.86**
**Patentblatt 86/31**

(84) Benannte Vertragsstaaten: **AT BE CH DE FR GB IT LI LU NL SE**

(71) Anmelder: **HOECHST AKTIENGESELLSCHAFT,**
**Postfach 80 03 20, D-6230 Frankfurt am Main 80 (DE)**

(72) Erfinder: **Preisegger, Ewald, Entenstrasse 7,**
**D-6085 Nauheim (DE)**

(54) **Verfahren zur Rückgewinnung von Lösemitteln bei Reinigungsprozessen.**

(57) Bei diesem Verfahren werden die organischen Lösemittel, die nach der Reinigungsphase flüssig anfallen abgepumpt. Die als Lösemitteldampf/Luftgemisch vorliegen, werden durch Abkühlen teilweise kondensiert und die noch dampfförmig verbleibenden Lösemittelanteile durch Aktivkohle adsorbiert. Zwecks Rückgewinnung dieser adsorbierten Lösemittel stellt man einen Sättigungspartialdruck des Lösemittels im Lösemitteldampf/Luftgemisch von höchstens 0,25 bar ein. Die in der Aktivkohle adsorbierten Lösemittelanteile werden mit einem Lösemitteldampf/Luftgemisch gleicher Konzentration wie bei der Adsorption und bei Temperaturen von ca. 100 bis 150 °C desorbiert.

HOECHST AKTIENGESELLSCHAFT   HOE 85/F 008     DPh.HS/cr

## Verfahren zur Rückgewinnung von Lösemitteln bei Reinigungsprozessen

Gegenstand der Erfindung ist ein Verfahren zur Rückgewinnung von Lösemitteln bei Reinigungsprozessen mit organischen Lösemitteln, ausgenommen Textilreinigung und Textilausrüstung, die nach dem Abpumpen der flüssigen Lösemittelanteile in Form eines Luft-/Lösemitteldampfgemisches vorliegen und durch Abkühlen teilweise auskondensiert werden, wobei die noch dampfförmig verbleibenden Lösemittelanteile anschließend durch Aktivkohle adsorbiert werden.

Bei Reinigungsprozessen werden heute überwiegend organische Lösemittel wie Trichlorfluormethan (FKW 11), Trichlortrifluorethan (FKW 113), Perchlorethylen oder Methylenchlorid verwendet.

Die Reinigung von z.B. Metallteilen, optischen Geräten, medizinischen Geräten, elektrischen Bauteilen usw. findet üblicherweise in oben offenen Reinigungsbehältern statt. Die Rückgewinnung der Lösemittel erfolgt durch Kondensation im Dampfraum des Reinigungsbehälters. Nachteilig ist die unvollständige Kondensation, so daß erhebliche Mengen von Lösemitteldampf in die Umgebung ausgetragen werden.

Diese organische Lösemittel müssen bei Reinigungsprozessen zurückgewonnen werden, um Lösemittelverluste und damit verbundene Umweltbelastungen zu vermeiden.

Der Erfindung liegt demnach die Aufgabe zugrunde, ein Verfahren zu schaffen, mit dem die Lösemittelverluste beträchtlich vermindert werden können.

Die Aufgabe wird durch das gattungsgemäße Verfahren gelöst, das dadurch gekennzeichnet ist, daß man einen Sättigungspartialdruck des Lösemittels im Lösemitteldampf-/ Luftgemisch von höchstens 0,25 bar, vorzugsweise von 0,05 bis 0,2 bar einstellt und die in der Aktivkohle adsorbierten Lösemittelanteile mit einem Lösemitteldampf/-Luftgemisch gleicher Konzentration wie bei der Adsorption und bei Temperaturen von ca. 100 bis 150°C desorbiert.

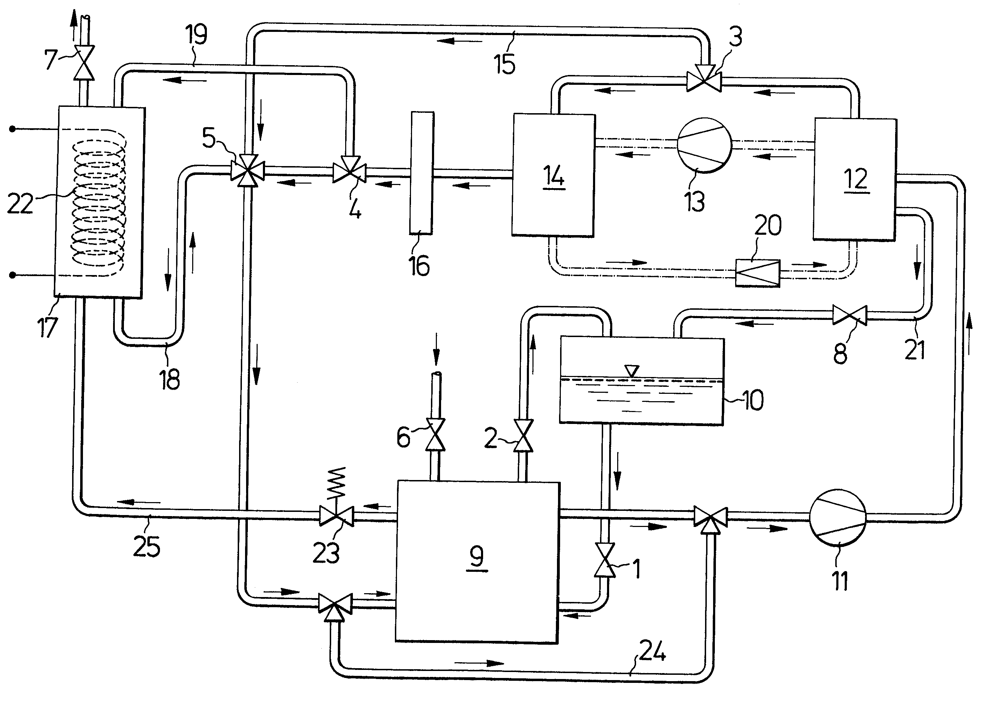

Zum besseren Verständnis wird das erfindungsgemäße Verfahren anhand einer Reinigungsanlage beschrieben, wie sie in der Figur dargestellt ist.

Nach Abschluß des Reinigungsprogramms und Abpumpen des Lösemittels in den Vorratstank 10 werden die Ventile 1 und 2 zunächst geschlossen, Ventile 6 und 8 bleiben geschlossen. Das Lösemitteldampf/Luftgemisch wird mit einem Gebläse 11 in einem geschlossenen Kreislauf geführt, der aus Reinigungsbehälter 9, Gebläse 11, Verdampfer 12, Ventil 3, Verflüssiger 14, gegebenenfalls Heizregister 16, Ventilen 4 und 5 und Reinigungsbehälter 9 besteht. Die Kälteanlage besteht aus Verdampfer 12, Verdichter 13, Verflüssiger 14 und Expansionsventil 20. Ihre Leistung wird so bemessen, daß sich ein Sättigungspartialdruck des Lösemittels im Lösemitteldampf/Luftgemisch von höchstens 0,25 bar, vorzugsweise 0,05 bis 0,2 bar einstellt. Dies ist neben ausreichender Verdichterleistung durch entsprechende Dimensionierung der Wärmetauscherfläche am Verdampfer 12 zu erreichen. Das Gebläse 11 saugt Lösemitteldampf/Luftgemisch aus dem Reinigungsbehälter 9 an und fördert es über den Verdampfer 12 der Kälteanlage, wodurch sich eine Konzentration an Lösemitteldampf entsprechend dem Sättigungspartialdruck bei der Temperatur am Verdampferaustritt einstellt. Überschüssige Lösemittelanteile werden kondensiert und fließen über eine Leitung 21 bei geöffnetem Ventil 8 in den Vorratstank 10. Das entfeuchtete Lösemitteldampf/Luftgemisch gelangt nun über das Ventil 3 in den Verflüsser 14 der Kälteanlage, wo es wieder erwärmt wird. Falls erforderlich, z.B. bei porösem Reinigungsgut, erhöht das Heizregister 16 die Temperatur dieses Gemisches auf ca. 25 bis 40 K über die Siedetemperatur des Lösemittels. Das erwärmte Gemisch gelangt dann über die Ventile 4 und 5 wieder in den Reinigungsbehälter 9, wo es wieder Lösemitteldampf aufnimmt. Wenn der Trocknungsprozeß beendet ist, wird Ventil 8 geschlossen und die Ventile 3 und 5 so umgeschaltet, daß das Lösemitteldampf/Luftgemisch nach Passieren des Verdampfers 12 über Leitungen 15 und 18 ein Aktivkohlefilterbett 17 passiert. Die Ventile 6 und 7 werden gleichzeitig geöffnet. Der Lösemitteldampf wird an der Aktivkohle adsorbiert, die lösemittelfreie Luft über Ventil 7 ausgeblasen. Gleichzeitig wird der Reinigungsbehälter 9 mit Frischluft gespült, die über Ventil 6 angesaugt wird. Diese Betriebsweise wird solange beibehalten, bis der Reinigungsbehälter mit Frischluft gefüllt ist. Nach Beendigung der Behälterspülung mit Frischluft werden die Ventile 4 und 5 so umgeschaltet, daß keine Verbindung zwischen Aktivkohlefilterbett 17 und Reinigungsbehälter 9 mehr besteht. Nun kann die Ladeöffnung des Reinigungsbehälters 9 geöffnet und das Reinigungsgut entnommen werden.

Nach dem Einbringen von neuem Gut wird zunächst das Aktivkohlefilterbett 17 regeneriert. Das geschieht ebenfalls wieder im geschlossenen Kreislauf, wobei das Aktivkohlefilterbett in umgekehrter Richtung wie bei der Adsorption durchströmt wird. Für diesen Vorgang wird zunächst Ventil 6 geschlossen, Ventil 8 geöffnet und die Ventile 3, 4 und 5 so geschaltet, daß das Gas den nachstehend beschriebenen Weg nehmen kann:

- 4 -

Nach Einschalten des Gebläses 11 und der Kälteanlage wird zunächst Luft aus dem Reinigungsbehälter 9 angesaugt, im Verdampfer 12 der Kälteanlage abgekühlt, im Verflüssiger 14 wieder erwärmt und im Heizregister 16 soweit aufgeheizt, daß der Luftstrom beim Austritt eine Temperatur von ca. 100 bis 150°C erreicht. Dieser heiße Luftstrom wird nun über Leitung 19 zum bereits vorher aufgeheizten Aktivkohlefilterbett 17 geführt, wodurch adsorbiertes Lösemittel wieder desorbiert und mit dem Luftstrom über Leitung 18 ausgetragen wird. Eventuell genügt auch bereits die Beheizung des Aktivkohlebettes. Bei weiteren Durchgängen reichert sich Lösemitteldampf im umlaufenden Gasstrom an. Im Verdampfer 12 wird Lösemittel kondensiert. Schließlich stellt sich ein Gleichgewicht entsprechend dem Sättigungspartialdruck der am Austritt des Verdampfers 12 herrschenden Temperatur ein. Ventil 7 bleibt bei diesem Vorgang geschlossen. Diese Betriebsweise wird solange fortgeführt, bis eine neue Gleichgewichtsbeladung des Aktivkohlefilterbettes 17 erreicht ist,die einem Lösemitteldampfanteil von maximal 20 Vol.-% in der durchgeblasenen Luft bei einer Temperatur von ca. 150°C entspricht. Ist dieser Zustand erreicht, wird die Heizung 22 des Aktivkohlefilterbettes 17 abgeschaltet; gleichzeitig werden die Ventile 4 und 5 so geschaltet, daß keine Verbindung mehr zwischen Aktivkohlefilterbett und Reinigungsbehälter 9 besteht. Das Gebläse 11 wird abgeschaltet, Ventil 8 geschlossen und die Ventile 1 und 2 geöffnet. Nun kann der Reinigungsbehälter 9 mit Lösemittel geflutet werden und das Reinigungsprogramm beginnen.

Über ein Überdruckventil 23 (Einstellung auf ca. 1,4 bar absolut) und Leitung 25 kann eventuell entstehender Überdruck entspannt werden (bei geöffnetem Ventil 7).

Soll die Desorption zeitlich parallel mit einem anderen Chargenabschnitt durchgeführt werden, kann über eine zusätzlich zu installierende Leitung 24 der Behälterraum umgangen werden.

HOE 85/F 008

PATENTANSPRUCH

Verfahren zur Rückgewinnung von Lösemitteln bei Reinigungsprozessen mit organischen Lösemitteln, ausgenommen Textilreinigung und Textilausrüstung, die nach dem Abpumpen der flüssigen Lösemittelanteile in Form eines Lösemitteldampf/Luftgemisches vorliegen und durch Abkühlen teilweise auskondensiert werden, wobei die noch dampfförmig verbleibenden Lösemittelanteile anschließend durch Aktivkohle adsorbiert werden, dadurch gekennzeichnet, daß man einen Sättigungspartialdruck des Lösemittels im Lösemitteldampf/Luftgemisch von höchstens 0,25 bar, vorzugsweise von 0,05 bis 0,2 bar einstellt und die in der Aktivkohle adsorbierten Lösemittelanteile mit einem Lösemitteldampf/Luftgemisch gleicher Konzentration wie bei der Adsorption und bei Temperaturen von ca. 100 bis 150°C desorbiert.

**Europäisches Patentamt**

**EUROPÄISCHER RECHERCHENBERICHT**

**0 189 041**

EP 86 10 0087

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | DE-A-2 214 153 (BÖWE BÖHLER & WEBER KG) <br> * Ansprüche 1,2,4 * | 1 | B 01 D 53/02 <br> B 01 D 5/00 |
| | --- | | |
| A | DE-C- 411 636 (C. MANGOLD et al.) <br> * Anspruch 1 * | 1 | |
| | --- | | |
| A | US-A-3 070 463 (D.J. BARDAY) <br> * Ansprüche 1-3 * | 1 | |
| | ----- | | |

### RECHERCHIERTE SACHGEBIETE (Int. Cl.4)

B 01 D 53/00
B 01 D 5/00
B 01 D 1/00

Der vorliegende Recherchenbericht wurde für alle Patentansprüche erstellt.

| Recherchenort <br> DEN HAAG | Abschlußdatum der Recherche <br> 19-03-1986 | Prüfer <br> POLESAK, H.F. |
|---|---|---|